# EUROPEAN PATENT SPECIFICATION

(11) **EP 0 727 854 B1**
(45) Date of publication and mention of the grant of the patent: **27.01.1999**
(21) Application number: 95118898.6
(22) Date of filing: 30.11.1995
(51) Int. Cl.: H02G 1/12

(54) **Method for processing an end of a shielded cable**
Verfahren zur Verarbeitung eines Endes eines abgeschirmten Kabels
Méthode de traitement d'une extrémité d'un câble blindé

(30) Priority: 15.02.1995 JP 26924/95
(43) Date of publication of application: 21.08.1996
(73) Proprietor: SUMITOMO WIRING SYSTEMS, LTD., Yokkaichi City Mie 510 (JP)
(72) Inventor: Watanabe, Kunihiko, c/o Sumitomo Wiring Syst. Ltd., Yokkaichi-City, Mie, 510 (JP)
(74) Representative: Müller-Boré & Partner Patentanwälte

(56) References cited:
- EP-A- 0 748 019
- DE-A- 4 212 805
- FR-A- 1 244 131

## Description

The present invention relates to a method for processing a shielded cable, in particular an end of a shielded cable and, more particularly to a method for processing an end of a shielded cable of transverse wind type.

In general, a shielded cable is such that a plurality of cores are wound by a multitude of drain wires and the drain wires are covered with an insulating sheath. The shielded cable of transverse wind type refers to the one in which linearly extending drain wires cover the cores while being twisted in one direction along the circumferential direction of the sheath. A variety of methods and apparatuses for, e.g. peeling the sheath at an end of such a shielded cable of transverse wind type and separating the cores from the drain wires are known.

For example, Japanese Unexamined Patent Publication No. 1-177810 discloses a method for processing drain wires of a shielded cable of transverse wind type. According to this method, peeling is applied to the shielded cable to expose the drain wires, which are then brushed.

Further, Japanese Unexamined Patent Publications Nos. 64-81608 and 64-26316 disclose methods for processing drain wires using a pressurized air.

It is preferable to easily and securely process the end of the shielded cable with simple equipments without damaging the surfaces of the drain wires. However, the art disclosed in the aforementioned publications cannot meet such a requirement.

For example, according to the method disclosed in Japanese Unexamined Patent Publication No. 1-177810 which adopts brushing, brushing needs to be applied to the surface of the drain wires many times. As a result, the surfaces of the drain wires are likely to be damaged or plating may be peeled off.

Further, the method disclosed in Japanese Unexamined Patent Publication No. 64-81608 which adopts the pressurized air necessitates a large equipment for supplying the pressurized air, leading to an increased cost of equipments.

A further method for processing a shielded cable is disclosed in the DE 42 12 805. This method comprises the steps of cutting a sheath of the shielded cable and moving this cut sheath to one side of the cable to expose the drain wires of the cable, loosening the braid of the exposed drain wires by rotating the free end of the cable to expand the drain wires, inserting a flat stick as an abutment between the expanded drain wires and bundling the drain wires abutting on the flat stick by a further rotation of the free end of the cable. Thereby it is difficult to exactly position the flat stick to ensure that really all drain wires are bundled on the flat stick so that the drain wires are completely separated from the core of the cable.

Therefore, it is an object of the present invention to provide an improved method for easily and securely processing a shielded cable, in particular with simple equipments without damaging the surfaces of drain wires.

This object is solved according to the invention by a method according to claim 1. Preferred embodiments are subject of the dependent claims.

According to the invention, there is provided a method for processing a shielded cable, in particular of the transverse wind type, comprising steps of:
cutting a sheath of the shielded cable,
moving the cut sheath on one side of the shielded cable to expose drain wires of the shielded cable,
loosening the braid of the exposed drain wires to move the drain wires from at least one core of the shielded cable, and
exposing the core from the expanded drain wires.

The core exposing step comprises the steps of inserting at least one plate member lengthwise between the expanded drain wires and rotating the at least one inserted plate member, in particular about an axis normal to the shielded cable.

Preferably, in the core exposing step, two plate members are inserted from opposite sides.

According to a further preferred embodiment, the method further comprises a step of separating the exposed core and drain wires from one another after the step of exposing the core.

According to a further preferred embodiment, the core exposing step is performed while the cut sheath at one side is staying on the core and the drain wires, wherein the separating process preferably comprises a step of buckling the core by moving the cut sheath staying at one side toward the sheath on the other side of the exposed core and drain wires.

Preferably, the method further comprises a step of holding the expanded drain wires by means of holding means, preferably further comprising a step of separating cores, when the shielded cable to be processed comprises at least two cores, most preferably further comprising a step of cutting the core in a predetermined or predeterminable length.

Further preferably, the method further comprises a step of braiding the drain wires after the separating step.

According to a preferred embodiment of the invention, there is provided a method for processing an end of a shielded cable of transverse wind type in which cores and drain wires covering the cores while being twisted in one direction along the circumferential direction of the cores are covered with a sheath, comprising steps of:
cutting the sheath,
moving the cut sheath at the end of the shielded cable to expose the drain wires,
loosening the braid of the exposed drain wires to expand the drain wires into a rough shape of a rugby ball,
exposing the cores from the expanded drain wires, and
separating the exposed cores and drain wires from one another,
wherein the core exposing step is performed by inserting a plate member between and along the expanded drain wires and by rotating the inserted plate member.

Accordingly, by rotating the plate member inserted between and along the drain wires, the drain wires are split in the radial directions in one step, thereby exposing the cores.

As described above, the drain wires can be split in one step, thereby exposing the cores. Accordingly, the end of the shielded cable can be easily and securely processed without damaging the cores. Further, since the cores can be easily exposed only by the use of the plate member, it is not necessary to provide a large equipment.

Further preferably, there is provided a method for processing an end of a shielded cable of transverse wind type in which cores and drain wires covering the cores while being twisted in one direction along the circumferential direction of the cores are covered with a sheath, comprising steps of:
cutting the sheath,
moving the cut sheath at the end of the shielded cable to expose the drain wires,
loosening the braid of the exposed drain wires to expand the drain wires into a rough shape of a rugby ball,
exposing the cores from the expanded drain wires, and
separating the exposed cores and drain wires from one another,
wherein the core exposing step is performed while the cut sheath at the end is staying on the ends of the cores and the drain wires, and the separating step is performed by buckling the cores by moving the cut sheath staying at the end toward the sheath on the opposite side of the exposed cores and drain wires.

Accordingly, by moving the cut sheath at the end toward the sheath at the opposite side of the exposed cores and the drain wires, the cores are buckled in one step to bulge in the radial directions, thereby being separated from the drain wires.

According to the above method, the cores and the drain wires can be separated in one step. The end of the shielded cable can be easily and securely processed in this respect as well. Particularly, since the cores and the drain wires are separated by moving the scrap sheath staying at the end of the shielded cable toward the remaining sheath at the opposite side, it is not necessary to provide a large equipment for this step, either.

Therefore, the invention has a remarkable effect that the end of the shielded cable can be easily and securely processed with simple equipments without damaging the surfaces of the drain wires.

These and other objects, features and advantages of the present invention will become more apparent upon a reading of the following detailed description and accompanying drawings in which:
FIG. 1 is a schematic front view showing a drain wire exposing step according to one embodiment of the invention,
FIG. 2 is a schematic front view showing a drain wire expanding step according to the embodiment,
FIG. 3 is a perspective view of drain wires expanded as a result of the step of FIG 2,
FIGS. 4 and 5 are perspective views showing a core exposing step according to the embodiment,
FIGS. 6 to 9 are perspective views showing a core separating step according to the embodiment,
FIG. 10 is a perspective view showing a core loosening step according to the embodiment,
FIG. 11 is a perspective view showing a drain wire braiding step according to the embodiment, and
FIGS. 12 and 13 are schematic front views showing a drain wire cutting step according to the embodiment.

Hereafter, one preferred embodiment of the invention is described in detail with reference to the accompanying drawings.

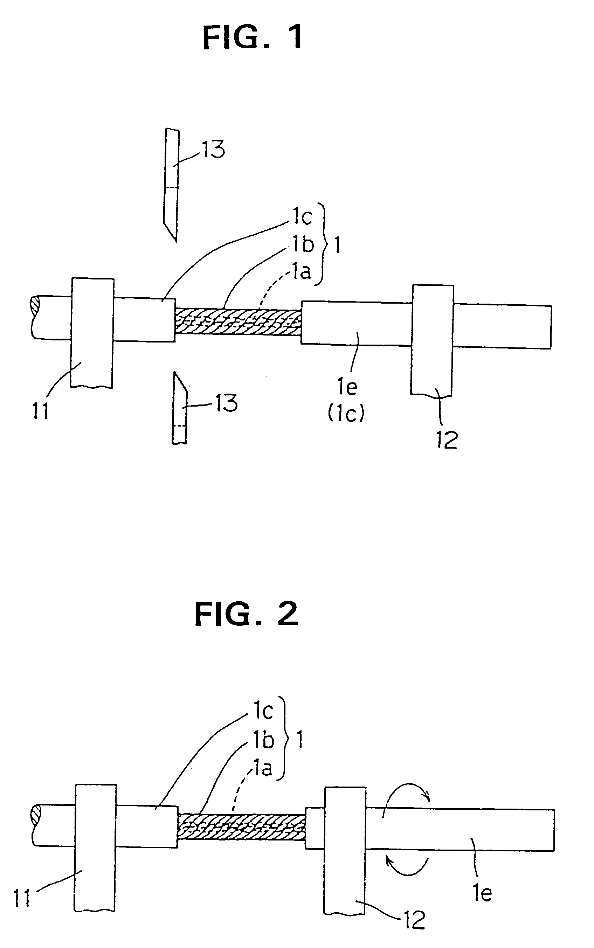

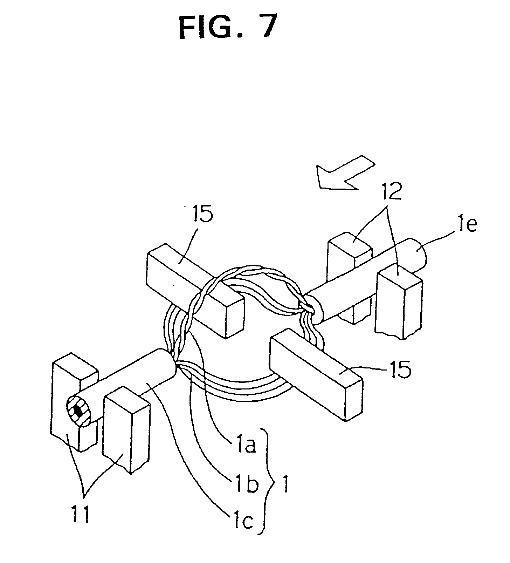

FIGS. 1 to 13 show an order of processing steps according to the embodiment.

First, with reference to FIG. 1, the processing method of this embodiment adopts a pair of clamping members 11 and 12 for tightly holding a shielded cable 1 of transverse wind type.

The shielded cable 1 is a known shielded cable of transverse wind type which consists essentially of two braided cores la, drain wires 1b covering the cores 1a, and a sheath 1c covering the drain wires 1b. The drain wires 1b are twisted in one direction around the outer surface of the cores 1a.

One clamping member 11 is a fixed clamp for tightly holding a base of the shielded cable 1 in a specified position after the sheath is peeled off at the end of the shielded cable 1 to be processed. The clamping member 11 is placed on an unillustrated work table and holds the shielded cable 1 in the specified position.

The other clamping member 12 is a movable clamp which is movable with respect to the fixed clamping member 11. Specifically, the clamping member 12 is movable in directions toward and away from the clamping member 11 and rotatable in the circumferential direction of the shielded cable 1. The movable clamping member 12 may be replaced, for example, by a hand tool such as pliers or pinchers.

In this embodiment, the base of the shielded cable 1 is held by the fixed clamping member 11, and the end of the shielded cable 1 is held by the movable clamping member 12. Then, a tension is caused to temporarily act on the shielded cable 1. In this state, a pair of V-shaped peeling blades 13 are opposed to each other in a direction normal to the extension of the shielded cable 1 and moved closer to each other to cut the sheath 1c. Thereafter, the movable clamping member 12 is moved away from the fixed clamping member 11 to expose the drain wires 1b of the shielded cable 1. The peeling blades 13 may be replaced by a peeling device as disclosed in Japanese Unexamined Patent Publication No. 64-26316 or cutters. As shown in FIG. 1, in this embodiment, the sheath 1e cut in the drain wire exposing step (hereinafter, a scrap sheath) still stays at the end of the shielded cable 1. In other words, the scrap sheath 1e is not completely separated from the shielded cable 1. It should be appreciated that the sheath 1c of the shielded cable 1 may be cut before the shielded cable 1 is held by the clamping members 11 and 12.

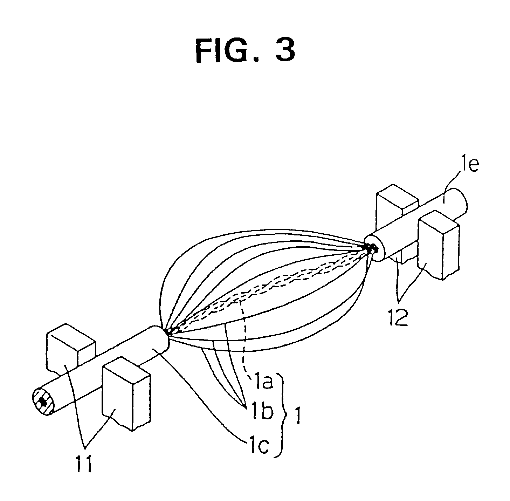

With reference to FIG. 2, according to the processing method of this embodiment, the drain wires 1b of the shielded cable 1 are loosened and expanded by rotating the movable clamping member 12 in a direction opposite to the twisted direction of the drain wires 1b a plurality of times. How many times the clamping member 12 is rotated differs depending upon the shielded cable 1, but it is generally sufficient to rotate the clamping member 12 a few times. As a result of the expanding step, the drain wires 1b expand into a rough shape of a rugby ball as shown in FIG. 3.

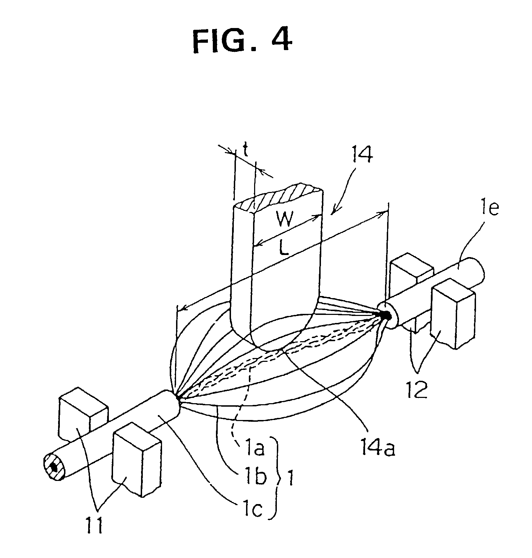

With reference to FIG. 4, a plate member 14 is inserted between and along the expanded drain wires 1b to expose the cores 1a from the drain wires 1b.

The plate member 14 used in the core exposing step is formed of, e.g. metal or relatively hard resin. Respective edges of the plate member 14 are bevelled so as not to scratch the drain wires 1b. Further, an arcuate portion 14a is formed at the leading end of the plate member 14 so as to facilitate the insertion.

The plate member 14 has a width W (e.g. 15 mm) which is slightly shorter than a length L (e.g. 30 mm) of the exposed drain wires along the longitudinal direction of the shielded cable 1, and has such a thickness t (e.g. 2 mm) that the drain wires 1b are unlikely to be scratched.

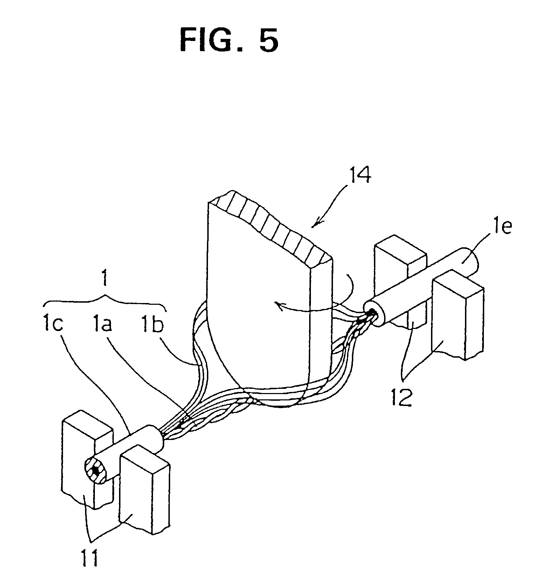

In the core exposing step of this embodiment, as shown in FIG. 4, the widthwise direction of the plate member 14 is aligned with the longitudinal direction of the drain wires 1b and the arcuate portion 14a of the plate member 14 is inserted between the expanded portions of the drain wires 1b. Thereafter, as shown in FIG. 5, the plate member 14 is rotated by approximately 90° about an axis normal to the shielded cable 1. As a result of the core exposing step, the drain wires 1b of the shielded cable 1 undergo such a plastic deformation that they are split with respect to the widthwise direction of the plate member 14 after the 90° rotation. By removing the plate member 14, a space where the cores 1a are exposed is defined where the plate member 14 was rotated.

As described above, according to this embodiment, the drain wires 1b expanding in the rough shape of a rugby ball are split in the radial directions in one step by the rotation of the plate member 14 inserted between and along the drain wires 1b, thereby exposing the cores 1a.

According to a further embodiment of the invention (not shown) in the core exposing step there is further inserted at least one additional plate member between the expanded portions of the drain wires 1b, in particular from a direction approximately opposite of the direction of insertion of the plate member 14. Subsequently the additional plate member is rotated by about 90° and then withdrawn, in order to define a further space, in which the cores 1a are exposed.

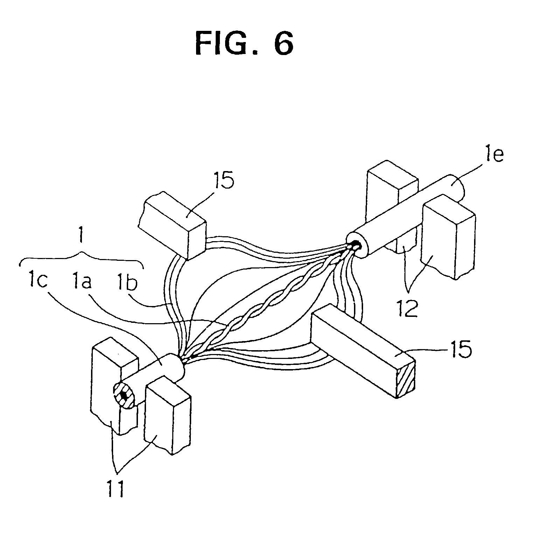

Next, with reference to FIG. 6, bulging portions of the split drain wires 1b are pressed by a pair of clamping claws 15 in order to separate the exposed cores 1a from the drain wires 1b. In this state, the movable clamping member 12 is moved toward the fixed clamping member 11. As a result, the cores 1a are so buckled and curved as to bulge in a direction different from, in particular normal to the bulging directions of the drain wires 1b.

As described above, in this embodiment, the cores la are buckled in one step by moving the cut sheath, i.e. the scrap sheath le toward the sheath 1c at the opposite side of the exposed cores and drain wires, thereby causing the cores 1a to bulge in the radial directions to separate them from the drain wires 1b.

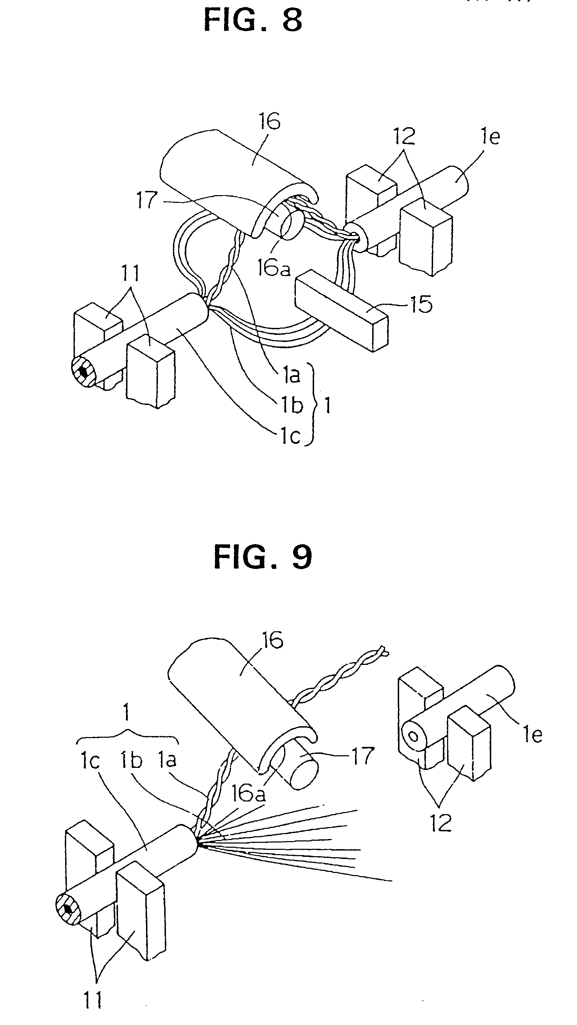

Next, with reference to FIG. 8, the bulging cores la are held between a pressing member 16 having an arcuate cross section and a bar 17 facing the inner surface of the pressing member 16. The held cores 1a are pulled out of the scrap sheath 1e as shown in FIG. 9. As a result of the pulling step, the cores 1a as well as the drain wires 1b are pulled out of the scrap sheath 1e.

Both the pressing member 16 and the bar 17 are made of metal. The pressing member 16 are bevelled at its edges so as not to scratch the cores 1a. Pliers having grips covered with rubber may be used instead of the pressing member 16 and the bar 17.

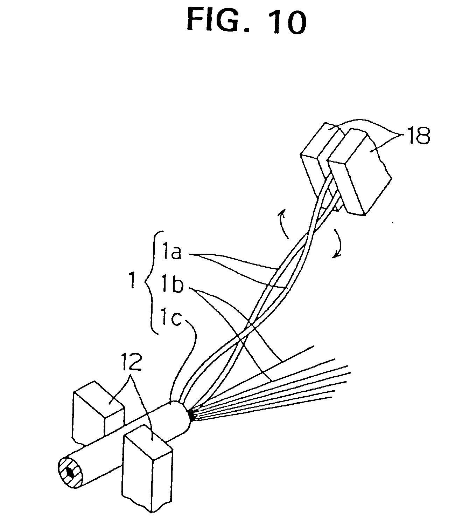

With reference to FIG. 10, the separated two cores 1a are twisted in a direction opposite to their braided direction, thereby being separated from each other. In this embodiment, the respective cores 1a are separated by rotating their ends gripped by a rotatable clamping member 18. Alternatively, the cores 1a may be held by the movable clamping member 12 and be loosened by rotating the clamping member 12.

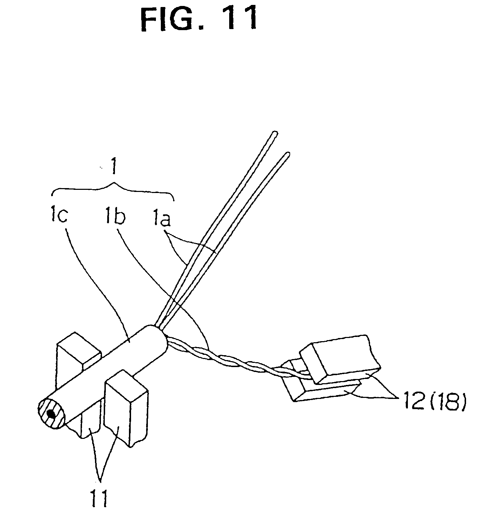

FIG. 11 is a perspective view showing a drain wire processing step according to the embodiment.

With reference to FIG. 11, the drain wires 1b separated from the cores 1a are twisted and braided again. The clamping member 12 or 18 may be used to braid the drain wires 1b. Alternatively, a separate clamping member may be used to braid the drain wires 1b at the same time the cores 1a are separated from each other.

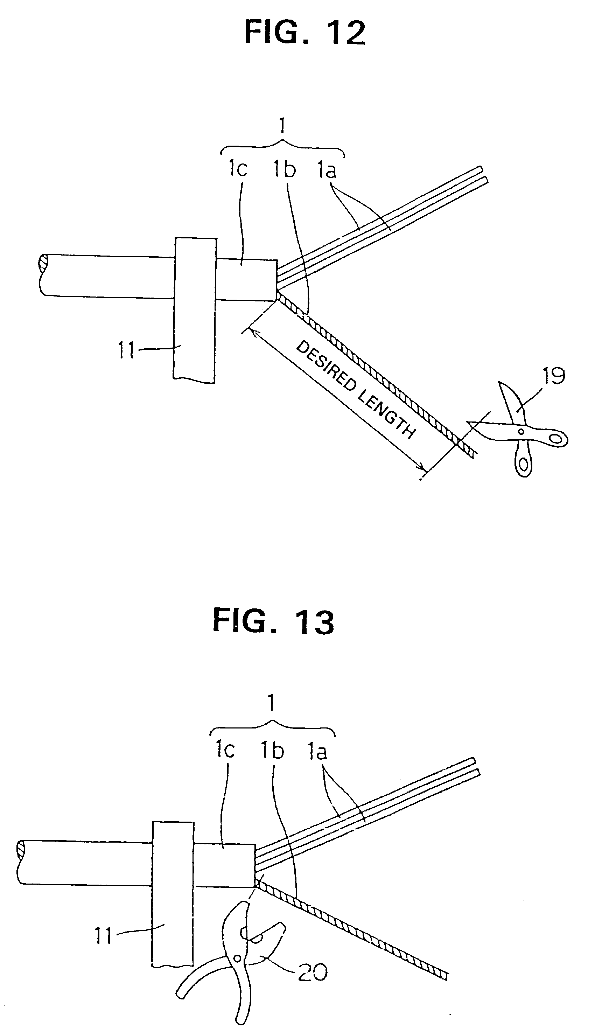

With reference to FIGS. 12 and 13, the braided drain wires 1b are cut in a desired measured length according to its use (see FIG. 12) or cut at the end of the sheath 1c (see FIG. 13). Consequently, processing of the end of the shielded cable 1 is completed.

As a means for cutting the drain wires 1b, scissors 19 for cutting metal wires as shown in FIG. 12 or pliers 20 as shown in FIG. 13 may be used.

As described above, according to the method of the embodiment, the drain wires 1b can be split in one step to separate the cores 1a therefrom. Accordingly, the end of the shielded cable 1 can be easily and securely processed without damaging the cores 1a. Further, it is not necessary to install a large equipment because the cores 1a can be separated from the drain wires 1b only using the plate member 14.

Further, the cores la can be separated from the drain wires 1b in one step by moving the scrap sheath le staying at the end of the shielded cable 1 toward the sheath 1c at the opposite side (FIG. 3). This also advantageously leads to an easy and secure processing of the end of the shielded cable. Particularly, since the cores 1a can be separated from the drain wires 1b by using the scrap sheath 1e and moving it toward the sheath 1c, it is not necessary to install a large equipment for this step, either.

Accordingly, this embodiment has a remarkable effect that the end of the shielded cable 1 can be easily and securely processed with simple equipments without damaging the surfaces of the drain wires 1b.

The foregoing embodiment is merely an exemplary preferred embodiment of the invention, and the invention is not limited to the foregoing embodiment. For example, in the foregoing embodiment, processing is mainly manually done by an operator. However, the respective steps may be done by machines, thereby realizing an automatic processing. In such a case as well, it can be easily seen that the respective steps can be performed with much simpler equipments than the prior art equipments. It should be appreciated that a variety of designs and changes can be made without departing from the scope of the invention as defined by the claims.

### LIST OF REFERENCE NUMERALS

- 1: ... Shielded Cable
- 1a: ... Core
- 1b: ... Drain Wire
- 1c: ... Sheath
- 1e: ... Scrap Sheath (Cut off End of the Sheath)
- 14: ... Plate Member

## Claims

1. A method for processing a shielded cable, in particular of the transverse wind type, comprising steps of:
cutting a sheath (1c) of the shielded cable (1),
moving the cut sheath (1e) on one side of the shielded cable (1) to expose drain wires (1b) of the shielded cable (1),
loosening the braid of the exposed drain wires (1b) to expand the drain wires (1b) from at least one core (1a) of the shielded cable (1),
inserting at least one plate member (14) lengthwise between the expanded drain wires (1b) and
exposing the core (1a) from the expanded drain wires,
characterized in that
the core exposing step further comprises a step of rotating the at least one inserted plate member (14), in particular about an axis normal to the shielded cable (1).

2. A method according to claim 1, wherein, in the core exposing step, two plate members (14) are inserted from opposite sides.

3. A method according to one of the preceding claims, further comprising a step of separating the exposed core (1a) and drain wires (1b) from one another after the step of exposing the core (1a).

4. A method according to one of the preceding claims, wherein the core exposing step is performed while the cut sheath (1e) at one side is staying on the core (1a) and the drain wires (1b).

5. A method according to claim 3 or to claims 3 and 4, wherein the separating step comprises a step of buckling the core (1a) by moving the cut sheath (1e) staying at one side toward the sheath (1c) on the other side of the exposed core (1a) and drain wires (1b).

6. A method according to one of the preceding claims, further comprising a step of holding the expanded drain wires (1b) by means of holding means (15).

7. A method according to one of the preceding claims, further comprising a step of separating cores (1a), when the shielded cable (1) to be processed comprises at least two cores (1a).

8. A method according to one of the preceding claims, further comprising a step of braiding the drain wires (1b) after the separating step.

## Patentansprüche

1. Verfahren zum Bearbeiten eines umhüllten bzw. abgeschirmten Kabels, insbesondere des quergewickelten Typs, mit den Schritten:
Einschneiden einer Ummantelung (1c) des abgeschirmten Kabels (1), Bewegen der eingeschnittenen Ummantelung (1e) an einer Seite des abgeschirmten Kabels (1), um Ableitungsdrähte (1b) des abgeschirmten Kabels (1) freizulegen,
Lösen des Geflechts der freigelegten Ableitungsdrähte (1b), um die Ableitungsdrähte (1b) von wenigstens einem Kern (1a) des abgeschirmten Kabels (1) aufzuweiten bzw. wegzuspreizen,
Einsetzen wenigstens eines Plattenelementes (14) längs zwischen die aufgeweiteten Ableitungsdrähte (1b) und
Freilegen des Kerns (1a) von den aufgeweiteten Ableitungsdrähten, dadurch gekennzeichnet, daß
der Kernfreilegungsschritt ferner einen Schritt umfaßt, das wenigstens eine eingesetzte Plattenelement (14) zu drehen, insbesondere um eine Achse normal zu dem abgeschirmten Kabel (1).

2. Verfahren gemäß Anspruch 1, bei welchem in dem Kernfreilegungsschritt zwei Plattenelemente (14) von gegenüberliegenden Seiten eingesetzt werden.

3. Verfahren gemäß einem der vorangehenden Ansprüche, ferner einen Schritt umfassend, den freigelegten Kern (1a) und Ableitungsdrähte (1b) voneinander nach dem Schritt des Freilegens des Kernes (1a) zu trennen.

4. Verfahren gemäß einem der vorangehenden Ansprüche, bei welchem der Kernfreilegungsschritt durchgeführt wird, während die eingeschnittene bzw. geschnittene Ummantelung (1e) an einer Seite auf dem Kern (1a) und den Ableitungssdrähten (1b) verbleibt.

5. Verfahren gemäß Anspruch 3 oder gemäß Ansprüchen 3 und 4, bei welchem der Trennschritt einen Schritt umfaßt, den Kern (1a) auszubeulen durch Bewegen der eingeschnittenen Ummantelung (1e), welche sich an einer Seite befindet, zu der Ummantelung (1e) an der anderen Seite des freigelegten Kerns (1a) und der Ableitungsdrähte (1b).

6. Verfahren gemäß einem der vorangehenden Ansprüche, ferner einen Schritt umfassend, die aufgeweiteten Ableitungsdrähte (1b) durch Halteeinrichtungen (15) zu halten.

7. Verfahren gemäß einem der vorangehenden Ansprüche, ferner umfassend einen Schritt des Trennens von Kernen (1a), wenn das abgeschirmte Kabel (1), welches verarbeitet werden soll, wenigstens zwei Kerne (1a) umfaßt.

8. Verfahren gemäß einem der vorangehenden Ansprüche, ferner umfassend einen Schritt, die Ableitungsdrähte (1b) nach dem Trennungsschritt zu verbzw. umflechten.

## Revendications

1. Procédé de traitement d'un câble blindé, en particulier du type à bobinage transversal, comprenant les étapes suivantes :
la coupe d'une gaine (1c) du câble blindé (20),
le déplacement de la gaine coupée (1e) d'un côté du câble blindé (1) afin que des fils de décharge (1b) du câble blindé (1) soient exposés,
le desserrage de la tresse des fils exposés de décharge (1b) afin que les fils de décharge (1b) se dilatent par rapport à au moins une âme (1a) du câble blindé (1),
l'insertion d'au moins un organe (14) en forme de plaque longitudinalement entre les fils de décharge (1b) qui ont été écartés, et
l'exposition de l'âme (1a) parmi les fils de décharge écartés,
caractérisé en ce que
l'étape d'exposition de l'âme comporte en outre une étape de rotation d'au moins un organe (14) en forme de plaque qui est inséré, en particulier autour d'un axe perpendiculaire au câble blindé (1).

2. Procédé selon la revendication 1, dans lequel, au cours de l'étape d'exposition de l'âme, deux organes (14) en forme de plaque sont insérés par des côtés opposés.

3. Procédé selon l'une des revendications précédentes, comprenant en outre une étape de séparation de l'âme exposée (1a) et des fils de décharge (1b) mutuellement après l'étape d'exposition de l'âme (1a).

4. Procédé selon l'une des revendications précédentes, dans lequel l'étape d'exposition de l'âme est réalisée alors que la gaine coupée (1e) placée d'un côté reste sur l'âme (1a) et les fils de décharge (1b).

5. Procédé selon la revendication 3 ou les revendications 3 et 4, dans lequel l'étape de séparation comprend une étape de flambage de l'âme (1a) par déplacement de la gaine coupée (1e) restant d'un côté vers la gaine (1c) de l'autre côté de l'âme exposée (1a) et des fils de décharge (1b).

6. Procédé selon l'une des revendications précédentes, comprenant en outre une étape de maintien de fils de décharge (1b) qui sont écartés par un dispositif de maintien (15).

7. Procédé selon l'une des revendications précédentes, comprenant en outre une étape de séparation des âmes (la) lorsque le câble blindé (1) à traiter comporte au moins deux âmes (1a).

8. Procédé selon l'une des revendications précédentes, comprenant en outre une étape de tressage des fils de décharge (1b) après l'étape de séparation.
